# FASCICULE DE BREVET EUROPEEN

(11) **EP 3 092 671 B1**
(45) Date de publication et mention de la délivrance du brevet: **18.10.2017**
(21) Numéro de dépôt: 15702521.4
(22) Date de dépôt: 06.01.2015
(51) Int. Cl.: H01M 8/0258, H01M 8/0254, H01M 8/0265, H01M 8/04082, H01M 8/0206, H01M 8/04089

(54) **PLAQUE DE GUIDAGE D'ECOULEMENT POUR PILE A COMBUSTIBLE**
FLUSSLEITENDE PLATTE FÜR EINE BRENNSTOFFZELLE
FLOW-GUIDING PLATE FOR A FUEL CELL

(30) Priorité: 07.01.2014 FR 1450062
(43) Date de publication de la demande: 16.11.2016
(73) Titulaire: Commissariat à l'Energie Atomique et aux Energies Alternatives, 75015 Paris (FR)
(72) Inventeur: POIROT-CROUVEZIER, Jean-Philippe, F-38450 Saint Georges de Commiers (FR)
(74) Mandataire: GIE Innovation Competence Group
(86) Numéro de dépôt international: PCT/FR2015/050012
(87) Numéro de publication internationale: WO 2015/104491

(56) Documents cités:
- EP-A1- 2 557 621
- US-A1- 2002 081 477
- US-A1- 2009 169 964
- US-A1- 2011 236 783
- US-A1- 2011 269 055
- US-A1- 2011 300 465

## Description

L'invention concerne les piles à combustible, et en particulier les piles à combustible comprenant une alternance de membranes échangeuses de protons et de plaques bipolaires.

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Un combustible tel que du dihydrogène ou du méthanol est utilisé comme carburant de la pile à combustible.

Dans le cas du dihydrogène, celui-ci est oxydé et ionisé sur une électrode de la pile et un comburant est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, fonctionnent à basse température et présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider les réactifs et les produits vers/depuis la membrane, pour guider du liquide de refroidissement, et pour séparer différents compartiments. Les plaques bipolaires sont également électriquement conductrices pour former des collecteurs des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

Les plaques bipolaires alimentent en continu les surfaces réactives des électrodes en réactifs, au fur et à mesure de leur consommation. La distribution des réactifs aux électrodes doit être la plus homogène possible sur toute leur surface. Les plaques bipolaires comportent des réseaux de canaux d'écoulement assurant la distribution des réactifs. Un réseau de canaux d'écoulement est dédié au fluide anodique, et un réseau de canaux d'écoulement est dédié au fluide cathodique. Les réseaux de canaux d'écoulement anodiques et cathodiques ne sont jamais en communication à l'intérieur de la pile, afin d'éviter la combustion directe du carburant et du comburant. Les produits de réactions et les espèces non réactives sont évacués par entraînement par l'écoulement jusqu'à la sortie des réseaux de canaux de distribution. Dans la plupart des architectures rencontrées, les plaques bipolaires comportent des canaux d'écoulement traversés pour du fluide de refroidissement, permettant l'évacuation de la chaleur produite.

On distingue principalement trois modes de circulation des réactifs dans les canaux d'écoulement:
- les canaux en serpentin: un ou plusieurs canaux parcourent l'ensemble de la surface active en plusieurs allers-retours.
- les canaux parallèles: un faisceau de canaux parallèles et traversants parcourt la surface active de part en part.
- les canaux interdigités: un faisceau de canaux parallèles et bouchés parcourt la surface active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent. Le document US2011/0236783 décrit un exemple d'une pile à combustible utilisant un tel mode de circuilation.

Les canaux d'écoulement peuvent être rectilignes ou légèrement ondulés.

Les matériaux les plus couramment utilisés pour les plaques bipolaires sont le composite carbone-polymère et le métal embouti.

Le métal embouti s'avère une solution favorisant l'allègement et la compacité des piles. Les plaques bipolaires utilisent alors des tôles métalliques minces, par exemple en acier inoxydable. Les canaux d'écoulement sont obtenus par emboutissage. Le plus fréquemment, on utilise une première plaque d'écoulement sous forme d'une première tôle emboutie définissant le canal d'écoulement anodique et une deuxième plaque d'écoulement sous forme d'une seconde tôle emboutie définissant le canal d'écoulement cathodique. Ces deux tôles des plaques d'écoulement sont assemblées dos à dos par soudage pour former une plaque bipolaire. Un canal d'écoulement du fluide de refroidissement est ménagé dans l'espace entre les tôles. US 2009/169964 A1 décrit des plaque de guidage en tôle estampée comprenant des parties plates définissant des orifices d'accès aux canaux de la première face et de la deuxième face, le but étant de faciliter l'introduction des fluides dans les canaux de la première et deuxième faces, et ainsi de diminuer les différences de pression. La technologie composite carbone-polymère permet une plus grande souplesse de conception des canaux d'écoulement par moulage de plaques plus épaisses.

Le document FR2973583 propose de supprimer le canal de liquide de refroidissement dans une plaque bipolaire sur deux. Avec des plaques bipolaires en tôle métallique, la plaque bipolaire dépourvue de canal de liquide de refroidissement comprend une unique tôle emboutie, ce qui allège la pile à combustible. Les canaux d'écoulement cathodiques sont formés sur une première face de la tôle, tandis que les canaux d'écoulement anodiques sont formés sur l'autre face de la tôle.

La conception de ces canaux est alors étroitement liée, puisque la face anodique est le négatif de la face cathodique. Néanmoins, le dessin des canaux doit garantir que les écoulements dans les plaques bipolaires à une seule tôle sont similaires à ceux dans les plaques bipolaires à deux tôles, afin de ne pas créer un déséquilibre d'alimentation entre les différentes cellules. Par ailleurs, il est souhaitable qu'une même tôle puisse être utilisée indifféremment pour une plaque bipolaire à tôle unique ou pour former une plaque bipolaire à deux tôles.

Une contrainte de conception supplémentaire porte sur les pertes de charge dans les écoulements de réactifs, ces pertes de charge devant avoir un même ordre de grandeur à l'anode et à la cathode. Cette contrainte a une incidence sur les sections respectives des canaux d'écoulement de carburant et de comburant. Cette contrainte complexifie la conception d'une plaque bipolaire à une unique tôle.

Pour du dihydrogène utilisé comme carburant, la section de passage dans les canaux anodiques doit être plus faible que celle dans les canaux cathodiques afin d'obtenir une perte de charge du même ordre de grandeur. En effet le dihydrogène est moins visqueux que le comburant circulant à la cathode et son débit est plus faible.

Le débit molaire de dihydrogène consommé dans une cellule est égal à I/, I étant le courant électrique produit et F la constante de Faraday. Le débit molaire d'air consommé est quant à lui égal à 1.2*I/F.

Dans la pratique, les débits de carburant et comburant introduits dans les cellules sont toujours supérieurs aux débits consommés, selon un facteur de majoration. Pour le dihydrogène, le facteur de majoration est généralement compris entre 1 et 2.5. Pour l'air, le facteur de majoration est généralement compris entre 1.2 et 3, pour garantir une quantité d'oxygène suffisante en sortie. Ainsi, pour un courant I donné, le rapport entre les débits molaires d'air et de dihydrogène est au moins égal à 2, et le plus couramment compris entre 3 et 5.

La viscosité du dihydrogène humide est de l'ordre de 8*10⁻⁶ à 13*10⁻⁶ Pa.s, en fonction de la température et de la teneur en humidité. La viscosité de l'air humide est de l'ordre de 12*10⁻⁶ à 21 *10⁻⁶ Pa.s.

Lorsque les canaux d'écoulement d'une plaque bipolaire sont identiques côté hydrogène et air, on obtient un rapport entre les pertes de charge pour l'air et pour le dihydrogène compris entre 2 et 10. Pour équilibrer les pertes de charges, il est souhaitable de réduire la section de passage des canaux d'écoulement de dihydrogène avec un rapport compris entre 2 et 10 par rapport à la section de passage des canaux de d'écoulement d'air.

Plusieurs alternatives sont connues pour réduire cette disproportion de pertes de charge, avec des inconvénients associés :
- augmenter la largeur des canaux d'écoulement cathodiques, en réalisant des canaux anodiques ayant la largeur la plus fine qu'il soit industriellement possible de réaliser. Ceci est en contradiction avec la recherche de l'efficacité optimale de conduction électronique dans la pile à combustible, qui est généralement obtenue en réduisant autant que possible la largeur des canaux d'écoulement ;
- réaliser moins de canaux d'écoulement à l'anode qu'à la cathode. La distance entre deux canaux anodiques augmente, de même que la largeur des dents séparant les canaux. Cette structure est inadaptée pour une plaque bipolaire à une seule tôle car la conduction électronique depuis les cathodes est alors fortement affectée ;
- diminuer la profondeur des canaux d'écoulement anodiques. Cette structure est inadaptée pour une plaque bipolaire à une seule tôle car les canaux anodiques et cathodiques ont automatiquement une même profondeur et sont donc affectés par cette diminution de profondeur.

L'invention vise à résoudre un ou plusieurs de ces inconvénients. L'invention vise notamment à permettre l'utilisation de mêmes tôles pour une plaque bipolaire à plaque d'écoulement unique et pour une plaque bipolaire à doubles plaques d'écoulement, sans disparités d'écoulement anodiques et cathodiques pour ces deux types de plaques bipolaires, et en favorisant une homogénéisation des pertes de charges entre les canaux anodiques et les canaux cathodiques. L'invention porte ainsi sur une plaque de guidage d'écoulement pour pile à combustible, telle que définie dans les revendications annexées.

L'invention porte également sur une pile à combustible telle que définie dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple de pile à combustible ;
- la figure 2 est une vue en perspective de canaux d'écoulement côté anodique d'un premier mode de réalisation d'une tôle métallique pour plaque d'écoulement de pile à combustible ;
- la figure 3 est une vue de dessus de la tôle métallique de la figure 2 côté anodique ;
- la figure 4 est une vue en coupe transversale de la tôle métallique de la figure 2 au niveau d'une première extrémité de canaux d'écoulement ;
- la figure 5 est une vue en coupe transversale de la tôle métallique de la figure 2 dans sa partie médiane ;
- la figure 6 est une vue en coupe transversale de la tôle métallique de la figure 2 au niveau d'une deuxième extrémité de canaux d'écoulement ;
- la figure 7 est une vue en coupe transversale d'une pile à combustible incluant différentes plaques bipolaires formées à partir de tôles métalliques de la figure 2 ;
- les figures 8 à 11 illustrent différentes vues en coupe longitudinales de la pile à combustible de la figure 7 ;
- la figure 12 est une vue en coupe transversale d'un deuxième mode de réalisation d'une tôle métallique au niveau d'une première extrémité de canaux d'écoulement.

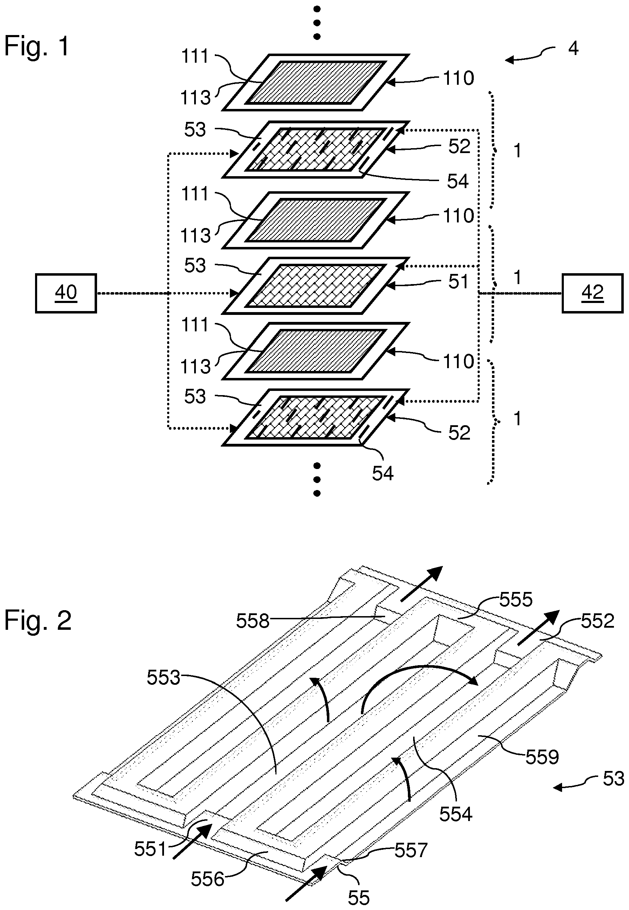

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Chaque cellule 1 présente également un circuit de refroidissement.

Chaque cellule 1 comprend un assemblage membrane/électrodes 110 ou AME 110. Un assemblage membrane/électrodes 110 comprend un électrolyte 113, une cathode 112 (non illustrée à la figure 1) et une anode 111 placées de part et d'autre de l'électrolyte et fixées sur cet électrolyte 113.

Entre chaque couple d'AME adjacents, une plaque bipolaire est disposée. La pile à combustible 4 comporte ici une alternance de plaques bipolaires 51 et 52.

Les plaques bipolaires 51 incluent une plaque d'écoulement formée d'une unique tôle ou feuille métallique 53. Dans une plaque bipolaire 51, le relief d'une première face de sa tôle métallique définit les canaux d'écoulement anodiques, et le relief d'une deuxième face de sa tôle métallique définit les canaux d'écoulement cathodiques.

Les plaques bipolaires 52 incluent deux plaques d'écoulement 53. Chacune de ces plaques d'écoulement 53 inclut une tôle ou feuille métallique. Les tôles sont superposées et fixées ensemble par l'intermédiaire de soudures 54. Dans une plaque bipolaire 52, le relief d'une face d'une première plaque d'écoulement 53 définit les canaux d'écoulement anodiques et le relief d'une face d'une plaque d'écoulement 53 définit les canaux d'écoulement cathodiques. Un canal d'écoulement de liquide de refroidissement est ménagé entre les tôles métalliques des plaques d'écoulement 53 d'une plaque bipolaire 52.

Les tôles métalliques formant les plaques d'écoulement 53 d'une plaque bipolaire 52 sont identiques. Les tôles métalliques formant les plaques d'écoulement 53 des plaques bipolaires 51 et 52 sont identiques. Ainsi, une même conception et un même procédé de fabrication peuvent être utilisés pour la fabrication des tôles métalliques des plaques d'écoulement 53 des plaques bipolaires 51 et 52. Les tôles métalliques sont par exemple formées en acier inoxydable.

De façon connue en soi, durant le fonctionnement de la cellule 1 :
- du dihydrogène s'écoule dans un conduit d'écoulement anodique entre une plaque bipolaire et une anode 111 ;
- de l'air s'écoule dans un conduit d'écoulement cathodique entre une plaque bipolaire et une cathode 112.

Au niveau de l'anode 111, le dihydrogène est ionisé pour produire des protons qui traversent l'AME 110. Les électrons produits par cette réaction sont collectés par la plaque bipolaire disposée en face de cette anode 111. Les électrons produits sont ensuite appliqués sur une charge électrique connectée à la pile à combustible 4 pour former un courant électrique. Au niveau de la cathode 112, de l'oxygène est réduit et réagit avec les protons pour former de l'eau. Les réactions au niveau de l'anode et de la cathode sont régies comme suit :

H₂ → 2H⁺ + 2e⁻

au niveau de l'anode ;

4H⁺ + 4e⁻ + O₂ → 2H₂O

au niveau de la cathode.

Durant son fonctionnement, une cellule de la pile à combustible génère usuellement une tension continue entre son anode et sa cathode de l'ordre de 1V. Le matériau catalyseur utilisé à l'anode 111 inclut avantageusement du platine, pour ses excellentes performances catalytiques.

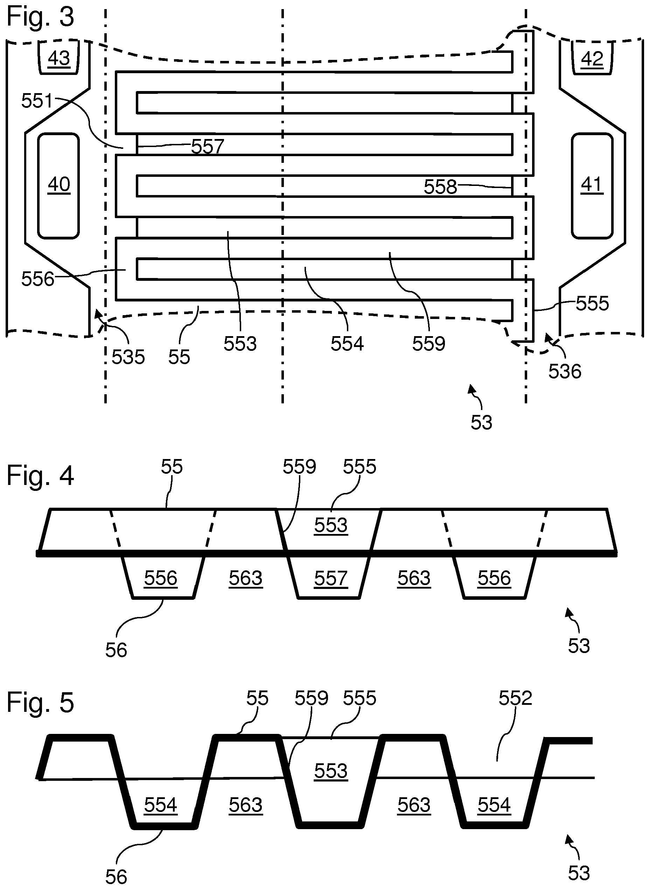

La figure 2 est une vue en perspective de canaux d'écoulement côté anodique d'un premier exemple d'une tôle conductrice d'une plaque de guidage d'écoulement 53 selon l'invention. La figure 3 est une vue de dessus de la plaque 53. Une telle plaque de guidage d'écoulement 53 peut être utilisée pour former différents types de plaques bipolaires, comme détaillé par la suite.

La plaque 53 comporte une première face 55 visible à la figure 2 et une deuxième face 56. Le relief de la plaque de guidage d'écoulement 53 définit une alternance de canaux d'écoulement sur les faces 55 et 56. Ainsi, deux canaux d'écoulement successifs d'une même face de la plaque 53 sont séparés par des parois 559 de délimitation d'un canal d'écoulement de l'autre face. Les canaux d'écoulement des faces 55 et 56 s'étendent selon une même direction. Dans cet exemple, les canaux d'écoulement sont sensiblement rectilignes.

Au niveau de la face 55, des orifices d'accès 551 débouchent dans un premier groupe de canaux d'écoulement 553. Les orifices d'accès 551 sont disposés à une première extrémité des canaux d'écoulement 553. Une première partie plate 535 forme une surface de guidage d'écoulement s'étendant entre les différents orifices d'accès 551. Une paroi inclinée 557 relie un orifice d'accès 551 à son canal d'écoulement 553. À la deuxième extrémité des canaux d'écoulement 553, se trouve une paroi inclinée 555 obturant ce canal. Ainsi, la paroi inclinée 555 forme une restriction d'écoulement par rapport à l'orifice d'accès 551. Une paroi inclinée 555 s'étend ici jusqu'au sommet de son canal d'écoulement 553.

Au niveau de la face 55, des orifices d'accès 552 débouchent dans un deuxième groupe de canaux d'écoulement 554. La face 55 présente une alternance de canaux d'écoulement 553 et de canaux d'écoulement 554. Les orifices d'accès 552 sont disposés à une deuxième extrémité des canaux d'écoulement 554. Une deuxième partie plate 536 forme une surface de guidage d'écoulement s'étendant entre les différents orifices d'accès 552. Une paroi inclinée 558 relie un orifice d'accès 552 à son canal d'écoulement 554. À la première extrémité de chaque canal d'écoulement 554, se trouve une paroi inclinée 556 obturant ce canal. Ainsi, la paroi inclinée 556 forme une restriction d'écoulement par rapport à l'orifice d'accès 552. Une paroi inclinée 556 s'étend ici jusqu'au sommet de son canal d'écoulement 554.

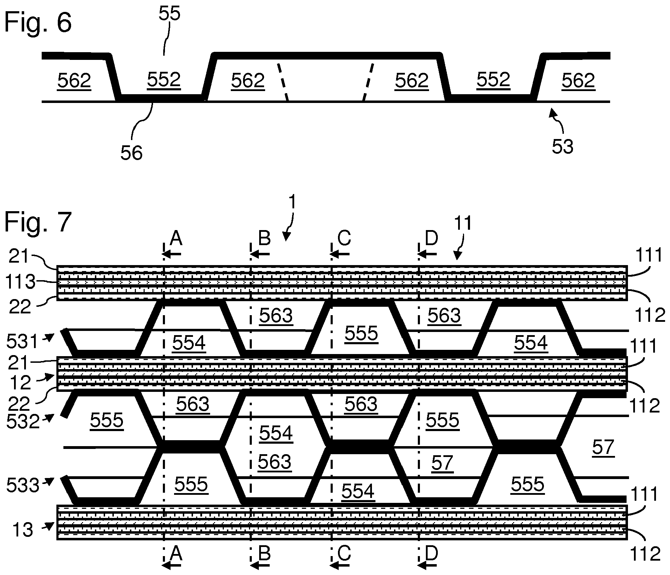

La figure 4 est une vue en coupe transversale de la plaque 53 dans la partie plate 535. La figure 5 est une vue en coupe transversale de la plaque 53 dans la partie médiane des canaux d'écoulement. La figure 6 est une vue en coupe transversale de la plaque 53 au niveau des orifices d'accès 552.

Au niveau de la face 56, des canaux d'écoulement 563 sont ménagés en alternance avec les canaux d'écoulement de la face 55. Les canaux d'écoulement 563 comportent des orifices d'accès (non référencés) à leurs deux extrémités. La partie plate 535 s'étend entre les orifices d'accès de la première extrémité des canaux d'écoulement 563. La partie plate 535 forme ainsi un répartiteur entre les orifices d'accès aux canaux d'écoulement 563 au niveau de cette première extrémité. La partie plate 536 s'étend entre les orifices d'accès de la deuxième extrémité des canaux d'écoulement 563. La partie plate 536 forme ainsi un répartiteur entre les orifices d'accès aux canaux d'écoulement 563 au niveau de cette deuxième extrémité.

Les parois 559 assurent une séparation entre les canaux d'écoulement des deux faces. Le fond d'un canal 563 est ainsi disposé au niveau du sommet d'un canal 553 ou 554, et vice versa. Les fonds des différents canaux d'écoulement sont destinés à former des surfaces conductrices pour collecter le courant électrique devant traverser les plaques de guidage 53.

Les orifices d'accès aux canaux d'écoulement 563 présentent une même section aux deux extrémités de ces canaux d'écoulement. Les orifices d'accès 562 de la deuxième extrémité des canaux d'écoulement 563 sont illustrés à la figure 6. Ces orifices d'accès 562 présentent ici une hauteur correspondant à la moitié de la hauteur des canaux 563. L'assemblage de deux plaques de guidage 53 dans un empilement de cellules d'une pile à combustible est ainsi facilité.

La plaque 53 est ici formée d'une tôle métallique emboutie pour lui conférer un relief. La forme de la face 55 est donc le complémentaire ou le négatif de la forme de la face 56. La plaque 53 peut par exemple être réalisée par emboutissage d'une tôle métallique.

Dans cet exemple, les canaux d'écoulement 553, 554 et 563 présentent une section transversale identique. Par conséquent, ces canaux peuvent présenter la largeur minimale correspondant à leur technologie de formation, et ce afin d'optimiser l'uniformité de répartition du courant à travers la plaque bipolaire à former. Par ailleurs, l'utilisation de mêmes sections pour les canaux d'écoulement des deux faces facilite l'assemblage de deux plaques 53 pour former une plaque bipolaire.

Dans cet exemple, les parties plates 535 et 536 sont placées à une même hauteur et les canaux d'écoulement 553, 554 et 563 présentent une même profondeur par rapport à ces parties plates 535 et 536.

Dans l'exemple, les orifices d'accès 551 sont destinés à communiquer avec une ouverture 40 ménagée à travers la partie plate 535. Les orifices d'accès à la première extrémité des canaux d'écoulement 563 sont destinés à communiquer avec une ouverture 43 ménagée à travers la partie plate 535. Les ouvertures 40 et 43 sont destinées à être isolées l'une de l'autre par l'intermédiaire de joints, de façon connue en soi. Les orifices d'accès 552 sont destinés à communiquer avec une ouverture 41 ménagée à travers la partie plate 536. Les orifices d'accès 562 à la deuxième extrémité des canaux d'écoulement 563 sont destinés à communiquer avec une ouverture 42 ménagée à travers la partie plate 536. Les ouvertures 41 et 42 sont destinées à être isolées l'une de l'autre par l'intermédiaire de joints, de façon connue en soi.

La figure 7 est une vue en coupe transversale d'un exemple de pile à combustible 4 utilisant des plaques de guidage d'écoulement telles que détaillées précédemment.

La pile à combustible 4 comporte des assemblages membrane/électrodes 11, 12 et 13. Chaque assemblage membrane/électrodes comporte ici une couche de diffusion gazeuse 21 placée en contact avec une anode 111. L'anode 111 est fixée sur une membrane échangeuse de protons 113. Une cathode 112 est fixée sur la membrane échangeuse de protons 113. Une couche de diffusion gazeuse 22 est placée en contact avec la cathode 112.

La pile à combustible 4 comporte en outre des plaques de guidage d'écoulement 531, 532 et 533 telles que détaillées en références aux figures 1 à 6. La plaque de guidage d'écoulement 531 forme ici à elle seule une plaque bipolaire disposée entre l'assemblage membrane/électrodes 11 et l'assemblage membrane/électrodes 12.

La paroi de fond des canaux d'écoulement 563 est ici en contact avec la couche de diffusion gazeuse 21 de l'assemblage membrane/électrodes 12. La paroi de fond des canaux d'écoulement 553 et 554 est ici en contact avec la couche de diffusion gazeuse 22 de l'assemblage membrane/électrodes 11.

Les plaques de guidage d'écoulement 532 et 533 forment ici une plaque bipolaire disposée entre l'assemblage membrane/électrodes 12 et l'assemblage membrane/électrodes 13. La paroi de fond des canaux d'écoulement 563 de la plaque 532 est ici placée en contact avec la paroi de fond des canaux d'écoulement 554 de la plaque 533. Des circuits d'écoulement 57 sont ainsi formés entre les plaques 532 et 533 par l'association des canaux d'écoulement 554 de la plaque 532 avec des canaux d'écoulement 563 de la plaque 533. La plaque 532 peut être fixée à la plaque 533 par l'intermédiaire de soudures (non illustrées) favorisant la conduction électrique entre les plaques 532 et 533.

La paroi de fond des canaux d'écoulement 554 de la plaque 532 est ici en contact avec la couche de diffusion gazeuse 22 de l'assemblage membrane/électrodes 12. La paroi de fond des canaux d'écoulement 563 de la plaque 533 est ici en contact avec la couche de diffusion gazeuse 21 de l'assemblage membrane/électrodes 13.

On constate que l'utilisation de plaques 531 à 533 présentant la même géométrie permet de former deux types de plaques bipolaires différents, tout en garantissant :
- des débits de carburant respectifs identiques à travers ces plaques bipolaires ;
- des débits de comburant respectifs identiques à travers ces plaques bipolaires.

La géométrie d'un objet est usuellement définie par la forme d'un objet ou par ses caractéristiques morphologiques.

Les canaux d'écoulement 563 de la plaque 531 sont destinés à être traversés par du comburant, par exemple de l'air. Les canaux d'écoulement 554 et 553 de la plaque 531 sont destinés à être traversés par du carburant, par exemple du dihydrogène.

Les canaux d'écoulement 563 de la plaque 532 sont destinés à être traversés par du comburant. Les canaux d'écoulement 554 et 553 de la plaque 533 sont destinés à être traversés par du carburant.

Les pertes de charge pour le carburant sont donc identiques pour les deux types de plaques bipolaires. Les pertes de charge pour le comburant sont également identiques pour les deux types de plaques bipolaires.

Du fait de la présence des parois 555 et 556 formant des restrictions d'écoulement respectivement dans les canaux d'écoulement 553 et 554 des plaques 531 et 533, la perte de charge dans ces canaux d'écoulement est très supérieure à la perte de charge dans les canaux d'écoulement 563 des plaques 531 et 532 (en supposant qu'ils sont traversés par un même gaz à un même débit), et ce malgré des sections identiques des canaux d'écoulement 563, 553 et 554 dans leur partie médiane. Ainsi, on peut homogénéiser les pertes de charge dans les écoulements de carburant et de comburant, et ce malgré des différences de débits molaires et des différences de viscosité des fluides dans ces canaux d'écoulement. Par ailleurs, la présence des parois 555 et 556 n'altère pas l'homogénéité de la répartition des fluides au niveau de la face 56.

Dans les canaux d'écoulement de comburant, l'écoulement de gaz s'effectue entre une entrée et une sortie d'un même canal d'écoulement 563. L'écoulement est donc ici du type parallèle. Du fait de la présence des parois d'obturation 555 et 556, l'écoulement de gaz dans les canaux d'écoulement de carburant débute par un orifice d'accès 551 dans un canal d'écoulement 553, puis le carburant est forcé de traverser une couche de diffusion gazeuse 21 pour atteindre un des canaux d'écoulement 554 placés de part et d'autre, avant d'atteindre un orifice de sortie 552 (comme illustré par les flèches à la figure 2). Pour un même gaz et un même débit d'écoulement, un tel écoulement est du type interdigité et subit donc une perte de charge très supérieure.

La plaque bipolaire formée des plaques 532 et 533 comporte un circuit d'écoulement 57 destiné à être traversé par du liquide de refroidissement. Afin d'alléger la plaque bipolaire formée de la plaque 531, celle-ci est dépourvue de circuit d'écoulement de liquide de refroidissement.

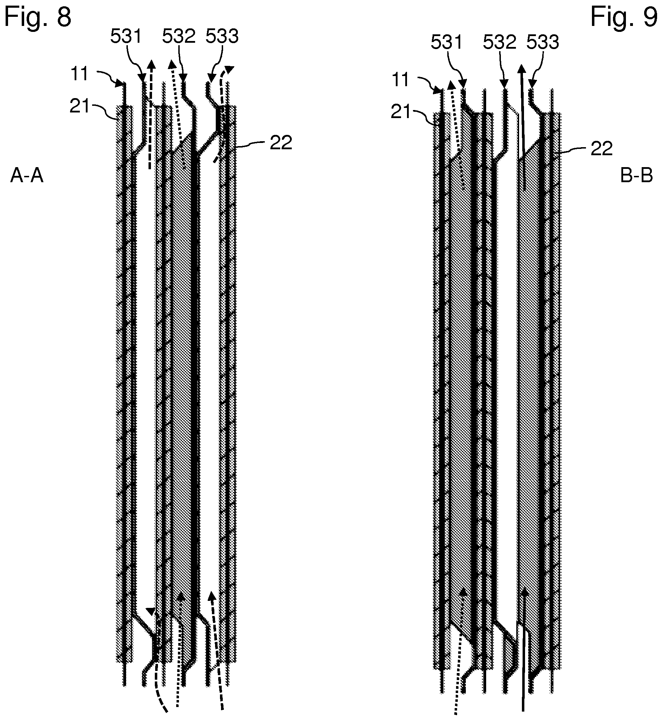

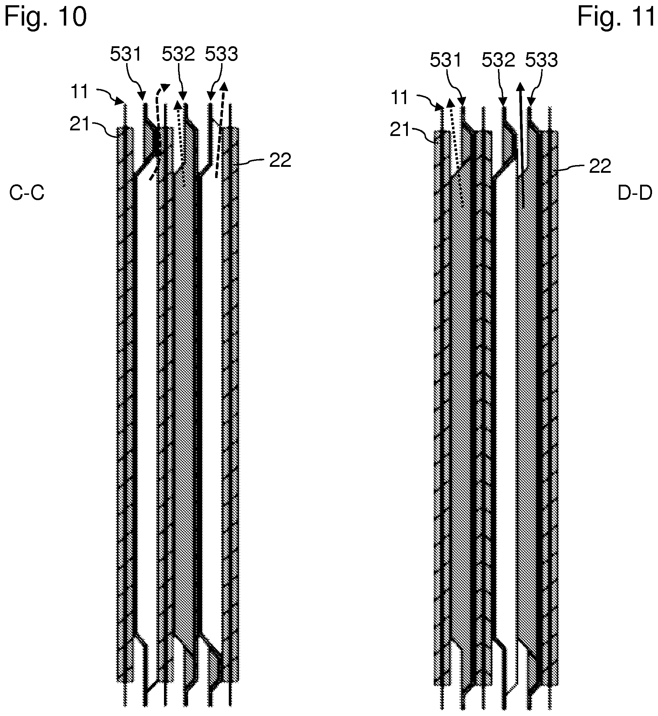

Les figures 8 à 11 sont des vues en coupe longitudinale permettant d'illustrer différents écoulements de fluides à travers les plaques bipolaires. Les écoulements en pointillés correspondent à des écoulements de comburant. Les écoulements en trait discontinu correspondent à des écoulements de carburant. Les écoulements en trait plein correspondent à des écoulements de liquide de refroidissement.

Afin de permettre la formation de plaques bipolaires à plaques 53 uniques et de plaques bipolaires à doubles plaques 53, pour pouvoir utiliser une même géométrie de plaques 53, celle-ci présente avantageusement un axe de symétrie. L'axe de symétrie est typiquement perpendiculaire à un plan médian de la plaque.

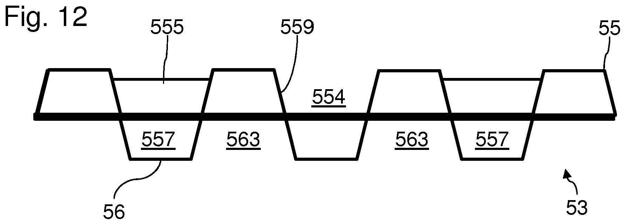

La figure 12 est une vue en coupe d'une variante de plaque d'écoulement 53 au niveau d'une première extrémité de canaux d'écoulement. La plaque d'écoulement 53 diffère de celle de la variante des figures 1 à 6 par la géométrie des parois 555 et 556. Les parois 555 et 556 ne s'étendent pas jusqu'au sommet de leur canal d'écoulement 553 et 554 respectivement (ou ne s'étendent pas jusqu'au fond des canaux d'écoulement 563 interposés). Par conséquent, une partie de l'écoulement dans un canal d'écoulement 553 peut s'écouler directement en surmontant la paroi 555, et de même une partie de l'écoulement traversant un canal d'écoulement 554 peut y pénétrer en surmontant la paroi 556. Avantageusement, les parois 555 et 556 s'étendent au moins jusqu'au trois-quarts de la profondeur des canaux d'écoulement 563 de la face 56. En formant des restrictions d'écoulement suffisamment hautes, les parois 555 et 556 peuvent induire une perte de charge suffisamment élevée à travers leurs canaux d'écoulement respectifs, et éventuellement forcer une partie de l'écoulement à traverser une couche de diffusion gazeuse recouvrant ces canaux d'écoulement.

Dans les exemples illustrés, les canaux d'écoulement présentent une forme rectiligne. On peut bien entendu prévoir d'autres géométries de canaux d'écoulement, par exemple des canaux d'écoulement présentant des ondulations le long de leur direction longitudinale.

## Revendications

1. Plaque de guidage d'écoulement (53) pour pile à combustible, **caractérisée en ce qu'**elle inclut une tôle conductrice comportant un relief :
- définissant une alternance de canaux d'écoulement sur des première et deuxième faces (55, 56) opposées de la tôle, deux canaux d'écoulement successifs (553, 554) de la première face (55) étant séparés par des parois (559) délimitant un canal d'écoulement (563) de la deuxième face (56), lesdits canaux d'écoulement des première et deuxième faces s'étendant selon une même direction longitudinale;
- définissant, à une première extrémité de chacun des canaux d'écoulement (563) de la deuxième face (56) et d'un premier groupe de canaux d'écoulement (553) de la première face, un orifice d'accès (551) respectif à ces canaux d'écoulement;
- définissant, à une deuxième extrémité de chacun des canaux d'écoulement de la deuxième face (56) et d'un deuxième groupe de canaux d'écoulement (554) de la première face, un orifice d'accès (552) respectif à ces canaux d'écoulement ;
- définissant, à la deuxième extrémité de chacun des canaux d'écoulement du premier groupe et à la première extrémité de chacun des canaux d'écoulement du deuxième groupe, une restriction d'écoulement (555, 556) par rapport à l'autre extrémité, la première face (55) comportant une alternance de canaux d'écoulement du premier groupe (553) et de canaux d'écoulement du deuxième groupe (554).

2. Plaque de guidage d'écoulement (53) selon la revendication 1, dans laquelle chacune desdites restrictions d'écoulement (555, 556) s'étend au moins jusqu'aux trois quarts de la profondeur des canaux d'écoulement (563) de la deuxième face.

3. Plaque de guidage d'écoulement (53) selon la revendication 1 ou 2, dans laquelle chacune desdites restrictions d'écoulement (555, 556) inclut une paroi s'étendant jusqu'au fond des canaux d'écoulement (563) de la deuxième face (56).

4. Plaque de guidage d'écoulement (53) selon l'une quelconque des revendications précédentes, dans laquelle les canaux d'écoulement des première et deuxième faces présentent une même section transversale dans leur partie médiane.

5. Plaque de guidage d'écoulement (53) selon l'une quelconque des revendications précédentes, dans laquelle la forme d'une face de la tôle est le complémentaire de la forme de l'autre face de la tôle.

6. Plaque de guidage d'écoulement (53) selon l'une quelconque des revendications précédentes, dans laquelle la tôle comporte :
- une première partie plate (535) s'étendant entre les orifices d'accès de la première extrémité des canaux d'écoulement de la deuxième face et s'étendant entre les orifices d'accès des canaux d'écoulement du premier groupe de la première face;
- une deuxième partie plate (536) s'étendant entre les orifices d'accès de la deuxième extrémité des canaux d'écoulement de la deuxième face et s'étendant entre les orifices d'accès des canaux d'écoulement du premier groupe de la première face.

7. Plaque de guidage d'écoulement (53) selon la revendication 6, dans laquelle la première partie plate (535) comporte des première et deuxième ouvertures (40, 43) traversantes, et dans laquelle la deuxième partie plate (536) comporte des troisième et quatrième ouvertures traversantes (41, 42).

8. Plaque de guidage d'écoulement (53) selon la revendication 6 ou 7, dans laquelle lesdits canaux d'écoulement des première et deuxième faces ont une même profondeur par rapport aux première et deuxième parties plates (535, 536).

9. Plaque de guidage d'écoulement (53) selon l'une quelconque des revendications précédentes, dans laquelle ladite tôle présente un axe de symétrie.

10. Plaque de guidage d'écoulement (53) selon l'une quelconque des revendications précédentes, dans laquelle ladite tôle est une tôle d'alliage d'acier, d'alliage de titane, d'alliage d'aluminium, d'alliage de nickel ou d'alliage de tantale.

11. Pile à combustible (1) comprenant :
- des première, deuxième et troisième plaques de guidage (531, 532, 533) selon l'une quelconque des revendications précédentes ;
- des premier, deuxième et troisième assemblages membrane/électrodes (11, 12, 13) comportant chacun une membrane échangeuse de protons et une cathode et une anode fixées de part et d'autre de la membrane échangeuse de protons ;
- des première et deuxième couches de diffusion gazeuse (21) ;
- la première plaque de guidage formant une plaque bipolaire interposée entre les premier et deuxième assemblages membrane/électrodes (11, 12), la première couche de diffusion gazeuse recouvrant les canaux d'écoulement de la première face de la première plaque de guidage (531) et étant en contact avec cette première face et avec l'anode du deuxième assemblage membrane/électrodes (12) ;
- les deuxième et troisième plaques de guidage (532, 533) délimitant entre elles un circuit d'écoulement (57) et formant une plaque bipolaire interposée entre les deuxième et troisième assemblages membrane/électrodes (12, 13), la première face de la deuxième plaque de guidage (532) étant en contact avec la deuxième face de la troisième plaque de guidage (533), la deuxième couche de diffusion gazeuse recouvrant les canaux d'écoulement de la première face et étant en contact avec la première face de la troisième plaque de guidage (533) et avec l'anode du troisième assemblage membrane/électrodes (13).

12. Pile à combustible selon la revendication 11, dans laquelle lesdites première à troisième plaques de guidage sont des plaques de guidage selon la revendication 3, dans laquelle les restrictions d'écoulement (555, 556) de la première plaque de guidage (531) sont en contact avec la première couche de diffusion gazeuse et dans laquelle les restrictions d'écoulement de la troisième plaque de guidage sont en contact avec la deuxième couche de diffusion gazeuse.

13. Pile à combustible selon la revendication 11 ou 12, dans laquelle lesdites première à troisième plaques de guidage (531, 532, 533) sont traversées par des ouvertures communiquant avec ledit circuit d'écoulement (57).

14. Pile à combustible selon l'une quelconque des revendications 11 à 13, dans laquelle lesdites première à troisième plaques de guidage présentent des géométries identiques.

## Patentansprüche

1. Auslaufführungsplatte (53) für eine Brennstoffzelle, **dadurch gekennzeichnet, dass** sie ein Leitblech umfasst, umfassend ein Relief:
- definierend eine Abfolge von Auslaufkanälen auf der gegenüberliegenden ersten und zweiten Seite (55, 56) des Blechs, wobei zwei aufeinanderfolgende Auslaufkanäle (553, 554) der ersten Seite (55) von einen Auslaufkanal (563) der zweiten Seite (56) beschränkenden Wänden (559) getrennt sind, wobei sich die Auslaufkanäle der ersten und zweiten Seite in einer gleichen Längsrichtung erstrecken;
- definierend an einem ersten Ende von jedem der Auslaufkanäle (563) der zweiten Seite (56) und einer ersten Gruppe von Auslaufkanälen (553) der ersten Seite eine Zugangsöffnung (551) jeweils zu diesen Auslaufkanälen;
- definierend an einem zweiten Ende von jedem der Auslaufkanäle der zweiten Seite (56) und einer zweiten Gruppe von Auslaufkanälen (554) der ersten Seite eine Zugangsöffnung (552) jeweils zu diesen Auslaufkanälen;
- definierend am zweiten Ende von jedem der Auslaufkanäle der ersten Gruppe und am ersten Ende von jedem der Auslaufkanäle der zweiten Gruppe eine Auslaufverengung (555, 556) in Bezug zum anderen Ende, wobei die erste Seite (55) eine Abfolge von Auslaufkanälen der ersten Gruppe (553) und von Auslaufkanälen der zweiten Gruppe (554) umfasst.

2. Auslaufführungsplatte (53) nach Anspruch 1, wobei sich jede der Auslaufverengungen (555, 556) wenigstens bis zu drei Viertel der Tiefe der Auslaufkanäle (563) der zweiten Seite erstreckt.

3. Auslaufführungsplatte (53) nach Anspruch 1 oder 2, wobei jede der Auslaufverengungen (555, 556) eine sich bis zum hinteren Ende der Auslaufkanäle (563) der zweiten Seite (56) erstreckende Wand umfasst.

4. Auslaufführungsplatte (53) nach einem der vorhergehenden Ansprüche, wobei die Auslaufkanäle der ersten und zweiten Seite einen gleichen Querschnitt im medianen Teil aufweisen.

5. Auslaufführungsplatte (53) nach einem der vorhergehenden Ansprüche, wobei die Form einer Seite des Blechs komplementär zur Form der anderen Seite des Blechs ist.

6. Auslaufführungsplatte (53) nach einem der vorhergehenden Ansprüche, wobei das Blech umfasst:
- einen sich zwischen den Zugangsöffnungen des ersten Endes der Auslaufkanäle der zweiten Seite erstreckenden und sich zwischen den Zugangsöffnungen der Auslaufkanäle der ersten Gruppe der ersten Seite erstreckenden ersten flachen Teil (535);
- einen sich zwischen den Zugangsöffnungen des zweiten Endes der Auslaufkanäle der zweiten erstreckenden und sich zwischen den Zugangsöffnungen der Auslaufkanäle der ersten Gruppe der ersten Seite erstreckenden zweiten flachen Teil (536);

7. Auslaufführungsplatte (53) nach Anspruch 6, wobei der erste flache Teil (535) eine querende erste und zweite Öffnung (40, 43) umfasst und wobei der zweite flache Teil (536) eine dritte und vierte querende Öffnung (41, 42) umfasst.

8. Auslaufführungsplatte (53) nach Anspruch 6 oder 7, wobei die Auslaufkanäle der ersten und zweiten Seite eine gleiche Tiefe in Bezug auf den ersten und zweiten flachen Teil (535, 536) aufweisen.

9. Auslaufführungsplatte (53) nach einem der vorhergehenden Ansprüche, wobei das Blech eine Symmetrieachse aufweist.

10. Auslaufführungsplatte (53) nach einem der vorhergehenden Ansprüche, wobei das Blech ein Blech aus einer Stahllegierung, einer Titanlegierung, einer Aluminiumlegierung, einer Nickellegierung oder Tantallegierung ist.

11. Brennstoffzelle (1), umfassend:
- eine erste, zweite und dritte Führungsplatte (531, 532, 533) nach einem der vorhergehenden Ansprüche;
- eine erste, zweite und dritte Membran/Elektroden-Baugruppe (11, 12, 13), umfassend jeweils eine Protonenaustauschmembran und eine Kathode und eine Anode, die an beiden Seiten der Protonenaustauschmembran befestigt sind.
- eine erste und zweite Gasdiffusionsschicht (21);
- wobei die erste Führungsplatte eine zwischen der ersten und der zweiten Membran/Elektroden-Baugruppe (11, 12) angeordnete bipolare Platte bildet und die erste Gasdiffusionsschicht die Auslaufkanäle der ersten der ersten Führungsplatte (531) abdeckt sowie mit dieser ersten Seite und mit der Anode der zweiten Membran/Elektroden-Baugruppe (12) in Kontakt ist;
- wobei die zweite und dritte Führungsplatte (532, 533) zwischen diesen einen Auslaufkreis (57) abgrenzen und eine zwischen der zweiten und der dritten Membran/Elektroden-Baugruppe (12, 13) angeordnete bipolare Platte bilden, die erste Seite der zweiten Führungsplatte (532) mit der zweiten Seite der dritten Führungsplatte (533) in Kontakt ist und die zweite Gasdiffusionsschicht die Auslaufkanäle der ersten Seite abdeckt sowie mit der ersten Seite der dritten Führungsplatte (533) und mit der Anode der dritten Membran/Elektroden-Baugruppe (13) in Kontakt ist.

12. Brennstoffzelle nach Anspruch 11, wobei die erste bis dritte Führungsplatte Führungsplatten nach Anspruch 3 sind, wobei die Auslaufverengungen (555, 556) der ersten Führungsplatte (531) in Kontakt mit der ersten Gasdiffusionsschicht sind und wobei die Auslaufverengungen der dritten Führungsplatte in Kontakt mit der zweiten Gasdiffusionsschicht sind.

13. Brennstoffzelle nach Anspruch 11 oder 12, wobei die erste bis dritte Führungsplatte (531, 532, 533) von mit dem Auslaufkreis (57) verbundenen Öffnungen durchquert werden.

14. Brennstoffzelle nach einem der Ansprüche 11 bis 13, wobei die erste bis dritte Führungsplatte identische Geometrien aufweisen.

## Claims

1. Flow guiding plate (53) for a fuel cell, **characterized in that** it includes a conducting sheet comprising a relief:
- defining an alternation of flow channels on opposite first and second faces (55, 56) of the sheet, two successive flow channels (553, 554) of the first face (55) being separated by walls (559) delimiting a flow channel (563) of the second face (56), said flow channels of the first and second faces extending along one and the same longitudinal direction;
- defining, at a first end of each of the flow channels (563) of the second face (56) and of a first group of flow channels (553) of the first face, a respective orifice (551) for access to these flow channels;
- defining, at a second end of each of the flow channels of the second face (56) and of a second group of flow channels (554) of the first face, a respective orifice (552) for access to these flow channels;
- defining, at the second end of each of the flow channels of the first group and at the first end of each of the flow channels of the second group, a flow restriction (555, 556) with respect to the other end, the first face (55) comprising an alternation of flow channels of the first group (553) and of flow channels of the second group (554).

2. Flow guiding plate (53) according to Claim 1, in which each of said flow restrictions (555, 556) extends at least as far as three quarters of the depth of the flow channels (563) of the second face.

3. Flow guiding plate (53) according to Claim 1 or 2, in which each of said flow restrictions (555, 556) includes a wall extending as far as the bottom of the flow channels (563) of the second face (56).

4. Flow guiding plate (53) according to any one of the preceding claims, in which the flow channels of the first and second faces exhibit one and the same cross section in their median part.

5. Flow guiding plate (53) according to any one of the preceding claims, in which the shape of one face of the sheet is the complement of the shape of the other face of the sheet.

6. Flow guiding plate (53) according to any one of the preceding claims, in which the sheet comprises:
- a first flat part (535) extending between the access orifices of the first end of the flow channels of the second face and extending between the access orifices of the flow channels of the first group of the first face;
- a second flat part (536) extending between the access orifices of the second end of the flow channels of the second face and extending between the access orifices of the flow channels of the first group of the first face.

7. Flow guiding plate (53) according to Claim 6, in which the first flat part (535) comprises first and second traversing openings (40, 43), and in which the second flat part (536) comprises third and fourth traversing openings (41, 42).

8. Flow guiding plate (53) according to Claim 6 or 7, in which said flow channels of the first and second faces have one and the same depth with respect to the first and second flat parts (535, 536).

9. Flow guiding plate (53) according to any one of the preceding claims, in which said sheet exhibits an axis of symmetry.

10. Flow guiding plate (53) according to any one of the preceding claims, in which said sheet is a sheet of steel alloy, of titanium alloy, of aluminum alloy, of nickel alloy or of tantalum alloy.

11. Fuel cell (1) comprising:
- first, second and third guiding plates (531, 532, 533) according to any one of the preceding claims;
- first, second and third membrane electrode assemblies (11, 12, 13) each comprising a proton exchange membrane and a cathode and an anode which are attached on either side of the proton exchange membrane;
- first and second gas diffusion layers (21);
- the first guiding plate forming a bipolar plate interposed between the first and second membrane electrode assemblies (11, 12), the first gas diffusion layer covering the flow channels of the first face of the first guiding plate (531) and being in contact with this first face and with the anode of the second membrane electrode assembly (12);
- the second and third guiding plates (532, 533) delimiting, between them, a flow circuit (57) and forming a bipolar plate interposed between the second and third membrane electrode assemblies (12, 13), the first face of the second guiding plate (532) being in contact with the second face of the third guiding plate (533), the second gas diffusion layer covering the flow channels of the first face and being in contact with the first face of the third guiding plate (533) and with the anode of the third membrane electrode assembly (13).

12. Fuel cell according to Claim 11, in which said first to third guiding plates are guiding plates according to Claim 3, in which the flow restrictions (555, 556) of the first guiding plate (531) are in contact with the first gas diffusion layer and in which the flow restrictions of the third guiding plate are in contact with the second gas diffusion layer.

13. Fuel cell according to Claim 11 or 12, in which said first to third guiding plates (531, 532, 533) are traversed by openings communicating with said flow circuit (57).

14. Fuel cell according to any one of Claims 11 to 13, in which said first to third guiding plates exhibit identical geometries.
